(19) Europäisches Patentamt
European Patent Office
Office européen des brevets

(11) Veröffentlichungsnummer: **0 112 282**
**B1**

(12) **EUROPÄISCHE PATENTSCHRIFT**

(45) Veröffentlichungstag der Patentschrift: **31.05.89**

(51) Int. Cl.⁴: **C 09 B 67/32**, C 09 B 67/22, D 06 P 1/41

(21) Anmeldenummer: **83810517.9**

(22) Anmeldetag: **10.11.83**

(54) **Feste Form einer Mischung von kationischen Farbstoffen.**

(30) Priorität: **16.11.82 CH 6668/82**

(43) Veröffentlichungstag der Anmeldung: **27.06.84 Patentblatt 84/26**

(45) Bekanntmachung des Hinweises auf die Patenterteilung: **31.05.89 Patentblatt 89/22**

(84) Benannte Vertragsstaaten: **BE CH DE FR GB LI**

(56) Entgegenhaltungen: **EP-A-0 056 947** **FR-A-2 231 808**

(73) Patentinhaber: **CIBA- GEIGY AG, Klybeckstrasse 141, CH- 4002 Basel (CH)**

(72) Erfinder: **Erzinger, Paul, Oristalstrasse 58/10, CH- 4410 Liestal (CH)**
Erfinder: **Läpple, Arnulf Ruediger, Sägeweg 18, CH- 4147 Aesch (CH)**

**EP 0 112 282 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft eine feste Handelsform von Farbstoffen enthaltend eine marineblaue bis schwarze Mischung von kationischen Farbstoffen, Verfahren zu deren Herstellung sowie Verfahren zum Färben von mit kationischen Farbstoffen färbbaren Materialien unter Verwendung dieser Handelsform.

Marineblaue und schwarze Mischungen von kationischen Farbstoffen sind bekannt. Diese enthalten zur Einstellung ihrer Farbtöne vor allem basische Farbstoffe wie Malachitgrün und/oder Fuchsin, sowie gegebenenfalls noch Chrysoidin und/oder Auramin. Der Nachteil derartiger Mischungen liegt vor allem darin, dass sie, auf Polyacrylnitril appliziert, nur in tiefen Tönen eine genügende Lichtechtheit besitzen, hervorgerufen durch die unterschiedliche Kombinierbarkeit der Ausgangskomponenten oft einen ungleichmässigen Aufbau aufweisen und dass sie eine schlechte Lichtechtheit und einen schlechten Aufbau aufweisen; die Mischungen weisen zudem als solche eine geringe Wasserlöslichkeit auf und sind nicht lagerstabil.

Aus der EP-Anmeldung 56 947 sind ferner Farbstoffmischungen aus drei kationischen Farbstoffen bekannt, die zum Schwarzfärben von sauer modifizierten Synthesefasern verwendet werden können. Diese Mischungen enthalten stets einen blauen Naphtholactamfarbstoff und es gibt keinerlei Hinweis, dass man stattdessen spezifische andere blaue Farbstoffe verwenden kann.

Aufgabe der Erfindung war es eine Mischung von Farbstoffen zu entwickeln, die die genannten Nachteile nicht aufweist und zudem universeller im Einsatz ist.

Die Lösung dieser Aufgabe besteht in einer festen Handelsform von Farbstoffen, die frei von Malachitgrün und/oder Fuchsin ist, appliziert marineblaue bis schwarze Färbtöne ergibt und die eine Mischung von kationischen Azo- bzw. Hydrazon-Farbstoffen enthält.

Diese Handelsform weist eine grössere Farbstärke auf als diejenige gemäss der genannten EP-Anmeldung 56 947, was einen wirtschaftlichen Vorteil mit sich bringt.

Die Erfindung betrifft somit eine neue, feste marineblaue bis schwarze Handelsform enthaltend mindestens eine kationische Gelbkomponente der Formel

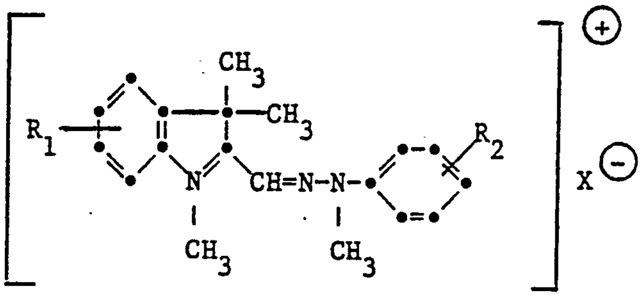

(I)

und/oder

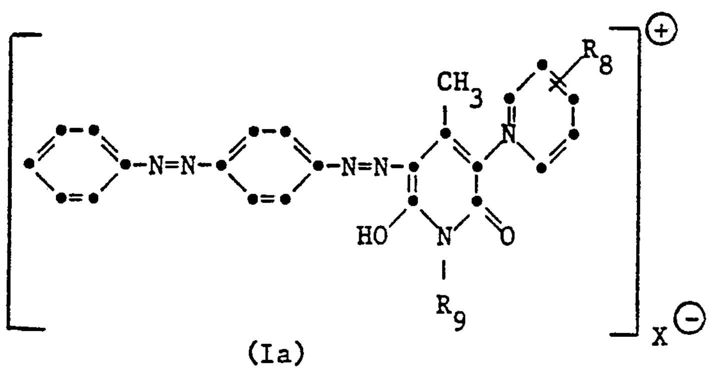

(Ia)

mindestens eine kationische Rotkomponente der Formeln

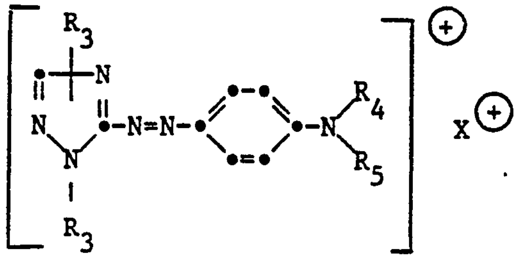

und/oder

(II)

und/oder

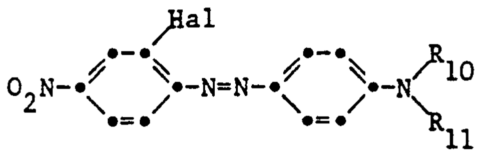

(IIa)

und mindestens eine kationische Blaukomponente der Formeln

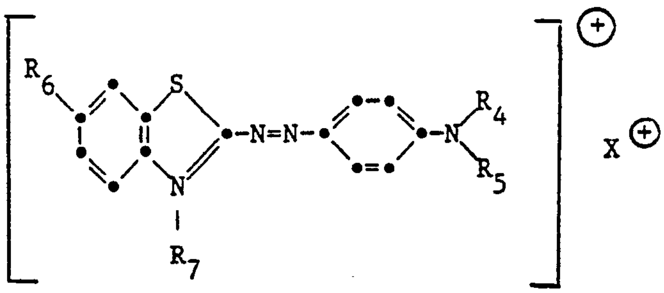

(III)

und/oder

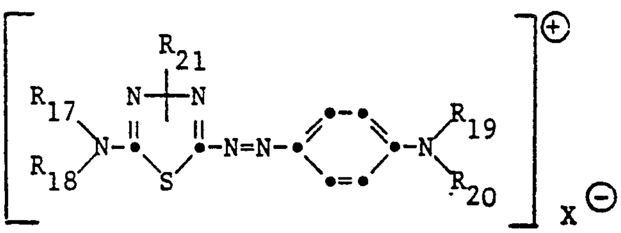

(IIIb)

in welchen Formeln bedeuten:

$R_1$ und $R_2$ unabhängig voneinander Wasserstoff, Halogen, $C_1$-$C_4$-Alkyl und $C_1$-$C_4$-Alkoxy,

$R_3$ $C_1$-$C_4$-Alkyl,

$R_4$ und $R_5$ unabhängig voneinander gegebenenfalls substituiertes $C_1$-$C_4$-Alkyl,

$R_6$ $C_1$-$C_4$-Alkoxy und Acylamino,

$R_7$ $C_1$-$C_4$-Alkyl,

$R_8$ Wasserstoff und Methyl,

$R_9$ Wasserstoff, gegebenenfalls substituiertes $C_1$-$C_6$-Alkyl, Phenyl und Cyclohexyl,

Hal Chlor und Brom,

$R_{10}$ $C_1$-$C_4$-Alkyl,

$R_{11}$ einen Rest der Formeln

$-C_2H_4N(CH_3)_3 \Big]^{\oplus} X^{\ominus}$

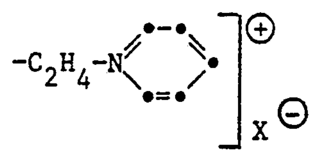

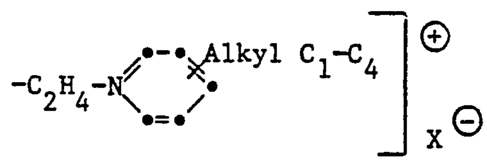

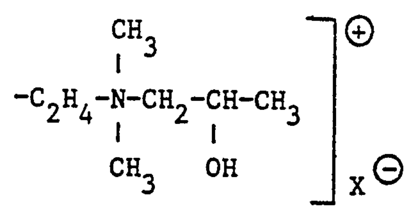

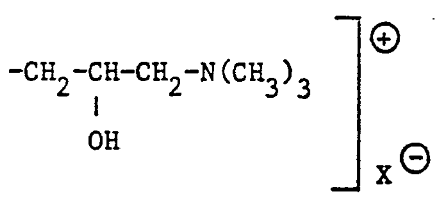

$R_{17}$, $R_{18}$, $R_{19}$ und $R_{20}$ unabhängig voneinander gegebenenfalls substituiertes $C_1$-$C_6$-Alkyl oder $R_{17}$ bildet mit $R_{18}$ unter Einschluss des N-Atoms und gegebenenfalls weiterer Heteroatome einen heterocyclischen 5- oder 6-Ring,

$R_{21}$ gegebenenfalls substituiertes $C_1$-$C_3$-Alkyl, und

X einen anionischen Rest sowie gegebenenfalls weitere Zusätze.

Die Farbstoffe der genannten Formeln sind bekannt. Eine bevorzugte Handelsform enthält beispielsweise 10 bis 15, insbesondere 12 bis 14 Gew.-% Gelbkomponente(n); 8 bis 15, insbesondere 10 bis 12 Gew.-% Rotkomponente(n) und 45 bis 55, insbesondere 47 bis 51 Gew.-% Blaukomponente. Diese Zusammensetzung stellt eine marineblaue Mischung dar.

Eine weitere bevorzugte Handelsform enthält beispielsweise 20 bis 25, insbesondere 22 bis 24 Gew.-% Gelbkomponente; 7 bis 12, insbesondere 9 bis 10 Gew.-% Rotkomponente und 15 bis 20, insbesondere 17 bis 19 Gew.-% Blaukomponente. Diese Zusammensetzung stellt eine schwarze Mischung dar.

$R_1$ und $R_2$ in der Bedeutung von Halogen stellen beispielsweise das Fluor-, Chlor- oder Bromatom dar.

Bedeutet $R_1$, $R_2$, $R_3$, $R_4$, $R_5$, $R_6$, $R_7$, $R_9$, $R_{10}$, $R_{19}$ und $R_{20}$ eine $C_1$-$C_4$-Alkyl- bzw. $C_1$-$C_6$-Alkyl bzw. $C_1$-$C_4$-Alkoxygruppe, so handelt es sich um unverzweigte oder verzweigte Gruppen wie beispielsweise um die Methyl-, Äthyl-, n-Propyl-, n-Butyl-, iso-Butyl-, tert.-Butyl-, Methoxy-, Äthoxy-, n-Propoxy- oder iso-Butoxygruppe. Im Falle von $R_4$, $R_5$, $R_9$, $R_{19}$ und $R_{20}$ kann die $C_1$-$C_4$ bzw. $C_1$-$C_6$-Alkylgruppe noch substituiert sein, als Substituenten kommen biespielsweise in Frage: die Hydroxyl- und Phenylgruppe.

Bildet $R_{17}$ mit $R_{18}$ zusammen einen Heterocyclus so kommt vorallem ein Morpholin und ein Piperazinring in Frage.

Im diesen Zusammenhang ergeben sich für $R_4$ und $R_5$ folgende vorteilhafte Kombinationen: $R_4$ unsubstituiertes $C_1$-$C_4$-Alkyl und $R_5$ substituiertes $C_1$-$C_4$-Alkyl sowie $R_4$ und $R_5$ substituiertes $C_1$-$C_4$-Alkyl.

Bedeutet $R_6$ eine Acylaminogruppe, so kann es sich um eine Benzoylaminogruppe oder vorzugsweise um eine Acetylaminogruppe handeln. Ist der $C_1$-$C_3$-Alkylrest gemäss $R_{21}$ substituiert, so kommt als Substituent vorallem OH in Frage.

Bevorzugte Handelsformen enthalten als Gelbkomponente(n) solche der Formeln

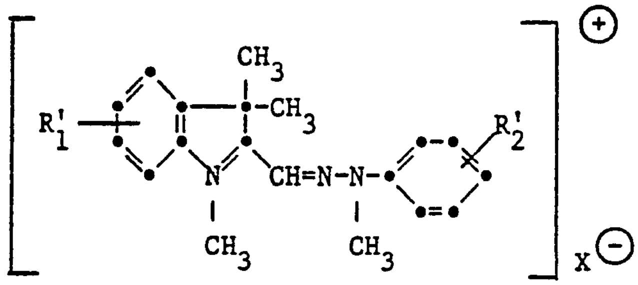

(I')

und/oder

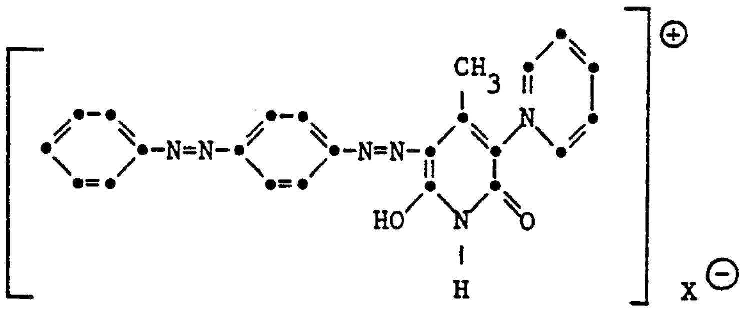

(I'a)

als Rotkomponente(n) solche der Formel

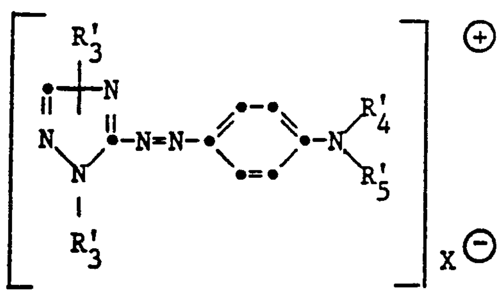

(II')

und/oder

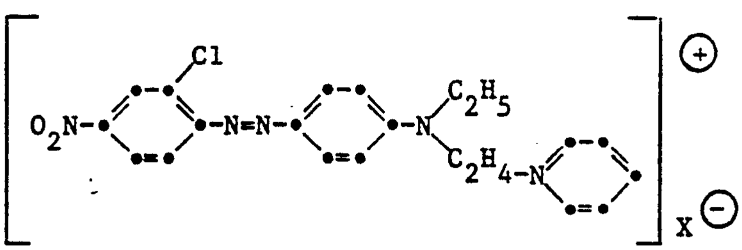

(II'a)

und/oder

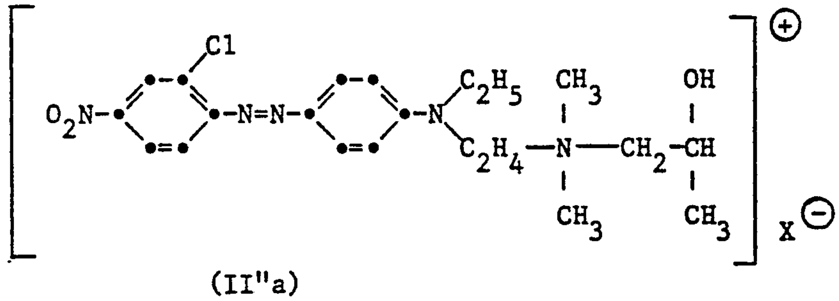

(II"a)

und als Blaukomponente(n) solche der Formel

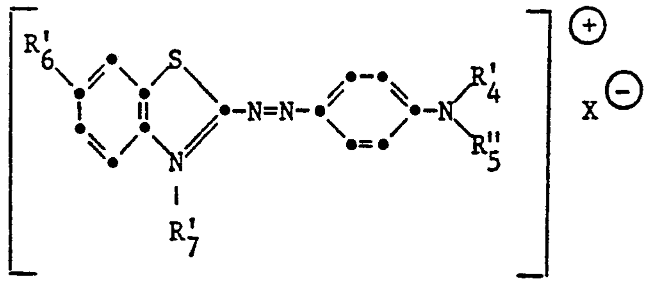

(III')

,

und/oder

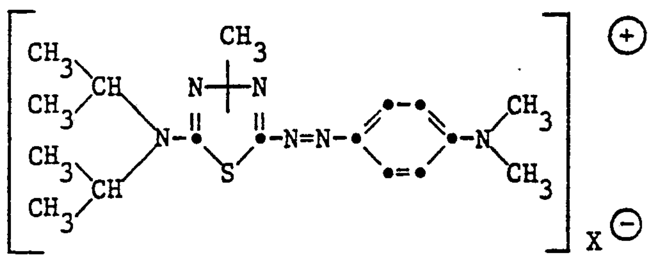

(III'b)

in welchen Formeln bedeuten:

$R'_1$ Wasserstoff, $R'_2$ eine $C_1$-$C_4$-Alkoxygruppe, $R'_3$ die Methylgruppe, $R'_4$ die Methyl- und Äthylgruppe, $R'_5$ eine durch Phenyl substituierte Methyl- und Äthylgruppe, $R''_5$ eine durch Hydroxyl substituierte Methyl-, Äthyl- und Propylgruppe, $R'_6$ die Methoxygruppe, $R'_7$ die Methyl- und Äthylgruppe und X ein Anion.

Besonders bevorzugt sind jedoch Handelsformen welche als Gelbkomponente eine solche der Formel I, als Rotkomponente eine solche der Formel II und als Blaukomponente eine solche der Formel III enthalten.

Als Anionen X kommen sowohl anorganische wie organische Anionen in Frage; beispielsweise sind genannt: Halogen, wie Fluorid-, Chlorid-, Bromid- oder Jodid-, Bortetrafluorid, Sulfat-, Methylsulfat-, Aminosulfat-, Perchlorat-, Carbonat-, Bicarbonat-, Phosphat-, Phosphormolybdat-, Phosphorwolframat-, Phosphorwolframmoylbdat-, Benzolsulfonat-, Naphthalinsulfonat-, 4-Chlorbenzolsulfonat-, Oxalat-, Maleinat-, Formiat-, Acetat-, Propionat-, Lactat-, Succinat-, Chloracetat-, Tartrat-, Methansulfonat- oder Benzoation oder komplexe Anionen wie das von Chlorzinkdoppelsalzen.

Bevorzugte Anionen X sind im Zusammenhang mit der Formel I und Ia Halogen, mit der Formel II und IIa Halogen oder Zinkchlorid und mit der Formel III, und IIIb Halogen oder Methylsulfat.

In den neuen Handelsformen kann der gelbe, rote bzw. blaue Farbstoff jeweils aus einer einzigen Komponente oder aber auch aus einer Mischung von Komponenten gleicher oder ähnlicher Nuance bestehen. Besteht der Farbstoff aus einer Mischung, so bringt dies den Vorteil mit sich, dass gewisse Eigenschaften eines Farbstoffes durch Zugabe eines weiteren Farbstoffes gleicher oder ähnlicher Farbnuance variiert werden können.

Die neuen Handelsformen enthalten ausser der definitionsgemässen Farbstoffmischung gegebenenfalls noch weitere übliche Zusätze, wie Stellmittel, (z. B. Dextrin, Natriumsulfat, Natriumchlorid,

Natriummethylsulfat oder andere Salze, die aus der Synthese als Begleitstoffe schon vorhanden sind), Entstäubungsmittel (z. B. Polyoxypropyllenglykole aus Propylenoxid und Äthylenoxid, Addukte aus Stearyldiphenyl-oxäthyldiäthylentriamin und Äthylenoxid sowie Mischungen aus Paraffinöl und einem nichtionischen Emulgator) und/oder katonische oder nichtionogene Dispergatoren.

Die neuen Farbstoffhandelsformen stellen eine sehr farbstarke Pulverform dar, besitzen eine hervorragende Löslichkeit in Wasser (ca. 100 g/ltr. bei 30°C) weisen eine sehr gute Hartwasserbeständigkeit auf und sind sowohl pH-beständig im für Polyacrylnitril-Fasern üblichen Bereich als auch HT-beständig bis 110°C.

Die Herstellung der neuen Handelsformen erfolgt z. B. derart, dass man die Gelb-, Rot- und Blaukomponenten bei Raumtemperatur in einer Mahl- und Mischapparatur miteinander vermischt und die Mischung vor, während oder nach der Mahlung gegebenenfalls mit den weiteren Zusätzen versetzt und zu staubarmen Handelsformen verarbeitet.

Die neuen Farbstoffhandelsformen haben eine grosse Einsatzmöglichkeit und lassen sich bei allen üblichen Färbeverfahren vor allem auf Polyacrylnitrilmaterialien einsetzen, beispielsweise zur Färbung von Kreuzspulen im Flottenverhältnis 1 : 10 oder zur Strangfärbung im Flottenverhältnis 1 : 40. Bei einer Färbetemperatur von beispielsweise 97 - 104°C beträgt die Färbedauer 120 - 60 Minuten.

Die Erfindung betrifft somit des weiteren Verfahren zum Färben und Bedrucken von Textilmaterialien, welche mit kationischen Farbstoffen färbbar sind, insbesondere Textilmaterialien, die z. B. vorteilhaft aus Homo- oder Mischpolymerisaten des Acrylnitrils bestehen, oder Polyester, welche durch saure Gruppen modifizert sind. Man färbt vorzugsweise in wässerigem, schwach saurem Medium nach dem Ausziehverfahren oder im Pad-Steam-Verfahren. Das Textilmaterial kann dabei in verschiedenartigster Aufmachungsform vorliegen, beispielsweise als Spinnkabel, Kammzug, lose Faser, Garn, Gewebe, Gewirke, Faden, Stückware und Fertigware wie Hemden oder Pullover.

Darüber hinaus können die neuen Handelsformen noch zum Färben von Polyacrylnitril-Nasskabel verwendet werden, ebenso zum Färben des Polyacrylnitril-Anteils in Mischgeweben, z. B. Mischgewebe aus Polyacrylnitril/Cellulose, Polyacrylnitril/Wolle, Polyacrylnitril/Polyamid, Polyacrylnitril/Polyester und Polyacrylnitril/sauer färbbares Polyacrylnitril.

Die mit diesen neuen Handelsformen gefärbten Textilmaterialien weisen sehr gute Eigenschaften und Gebrauchsechtheiten auf. Genannt sind in diesem Zusammenhang vor allem die neutrale Nuance, der geringe Kunstlichtumschlag, die hohe Lichtechtheit in allen Farbtiefen (von Grau bis Schwarz und von gedecktem Blau bis Marine) und das gute Aufbauvermögen.

Erwähnt sei noch, dass die neuen Farbstoffmischungen als Schwarz- und Marine-Färbungen eine gute thermische Stabilität und Hydrolysestabilität aufweisen und beispielsweise beim Nachdämpfen von Melange-(Mouliné-) Garnen die weissen Fasern nicht anbluten.

Ein weiterer, wesentlicher Vorteil der neuen Handelsform besteht darin, dass man diese als Füll- und Abdunklungskomponente verwenden kann; sie ist mit kationischen Buntfarbstoffen kombinierbar und kann so als Nuancierkomponente eingesetzt werden. Damit besteht eine neue Möglichkeit gedeckte Nuancen auf Polyacrylnitril wirtschaftlich zu erstellen. So kann beispielsweise jeder der Einzelfarbstoffe I, II oder III der neuen Mischung mit der neuen Handelsform, enthaltend z. B. die Mischung der Farbstoffe I, II und III nuanciert werden. Wird beispielsweise der gelbe Farbstoff I mit der neuen Handelsform nuanciert, so kann man die verschiedensten Olive-Töne erhalten; wird der rote Farbstoff II mit der neuen Handelsform nuanciert, so kann man die verschiedensten Rubin- bis Bordeaux-Töne erhalten und wird der blaue Farbstoff III mit der neuen Handelsform nuanciert, so kann man die verschiedensten Blau-Töne erhalten. Schliesslich ist es auch noch möglich die neuen Handelsformen unter sich zu mischen, beispielsweise die Marineblaumischung mit der Schwarzmischung, wobei man zu den verschiedensten Grau- und Marineblautönen gelangt.

Die folgenden Beispiele veranschaulichen die Erfindung ohne sie darauf zu limitieren. Teile (T) bedeuten Gewichtsteile und die Temperaturen sind in Grad Celsius angegeben.

**Beispiel 1:**

In einer geeigneten Mahl- und Misch-Apparatur werden die folgenden Komponenten jeweils zu einer rieselfähigen staubarmen Handelsform verarbeitet:

a) <u>Schwarze Handelsform</u>

22,5 T Farbstoff der Formel

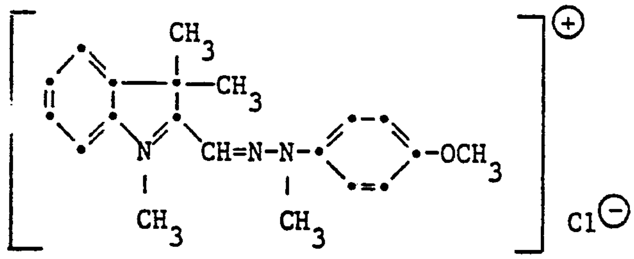

9,6 T Farbstoff der Formel

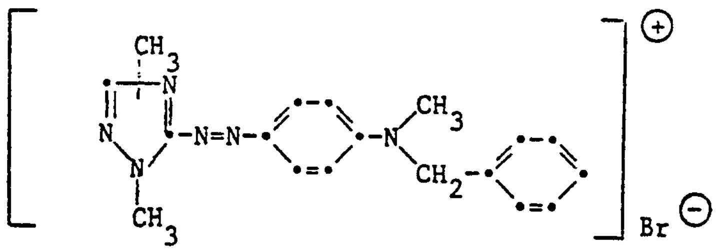

17,6 T Farbstoff der Formel

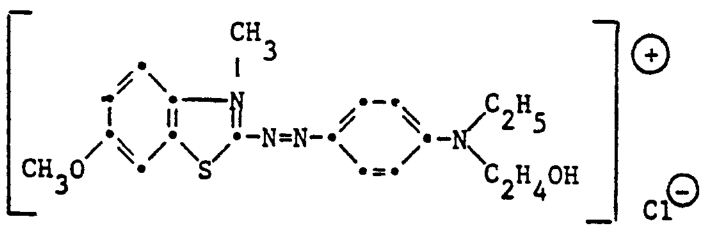

44,3 T Natriumsulfat wasserfrei und
6,0 T einer Mischung aus Paraffinöl und einem nichtionischen Emulgator als Entstäubungsmittel.

b) <u>Marineblaue-Handelsform</u>

13,0 T Farbstoff der Formel

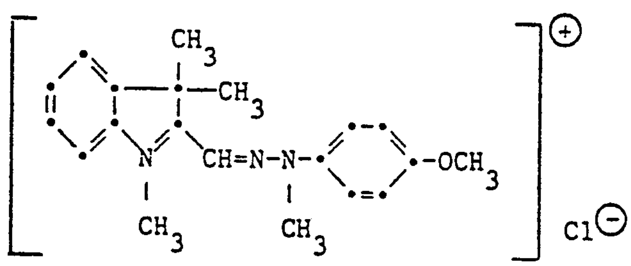

11,0 T Farbstoff der Formel

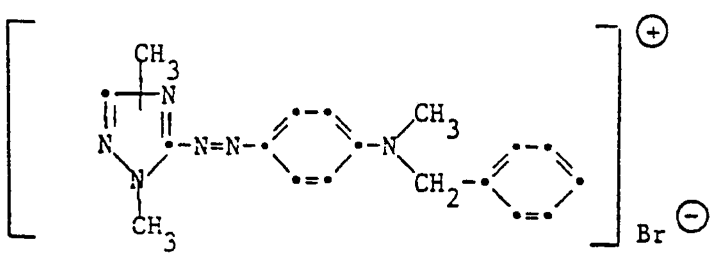

49,2 T Farbstoff der Formel

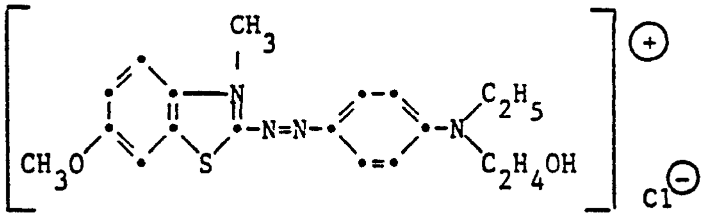

21,3 T Natriumsulfat wasserfrei, und
5,5 T einer Mischung aus Paraffinöl und einem nichtionischen Emulgator als Entstäubungsmittel.

Diese genannten Schwarz- bzw. Marineblaue-Handelsformen sind staubarm sowie zinkfrei.

**Beipiel 2:**

92 kg kontinuierlich vorgebauschtes Euroacril® (Polyacrylnitril)-Hochbauschgarn werden als Wickelkörper in einem Henriksen-Zirkulationsfärbeapparat, enthaltend eine wässerige Färbeflotte (ca. 1300 l) mit 0,5 % einer wässerigen Lösung eines Alkylphenoläthoxylates, 2 % Essigsäure (80 %-ig), 1 % Natriumazetat krist. und 2760 g der schwarzen Farbstoffmischung gemäss Beispiel 1 bei 70° eingefahren, und während 5 Minuten mit der Flottenzirkulation von innen nach aussen behandelt. Anschliessend erhitzt man innerhalb von 30 Minuten auf 100° und färbt während 60 Minuten bei dieser Temperatur. Dann wird bis 50° abgekühlt, gespült, zentrifugiert und getrocknet. Man erhält ein egal gefärbtes, tiefschwarzes Euroacril®-Garn.

**Beispiel 3:**

100 kg Dralon®-(Polyacrylnitril)-Webgarn auf Kreuzspulen werden in einem Then-Kreuzspulfärbeapparat, enthaltend eine wässerige Färbeflotte (ca. 1200 l) mit 0,5 % einer wässerigen Lösung eines Alkylphenoläthoxylates, 2 % Essigsäure (80 %-ig), 1 % Natriumazetat krist., 5 % Glaubersalz kalz. und 500 g einer schwarzen Farbstoffmischung gemäss Beispiel 1, sowie 1 % einer wässerigen Lösung von Dodecyldimethylbenzylammoniumchlorid bei 75° eingefahren und 5 Minuten mit der Flottenzirkulation von innen nach aussen behandelt. Dann erhitzt man innerhalb von 45 Minuten auf 100° und färbt während 60 Minuten bei dieser Temperatur. Anschliessend kühlt man ab, spült, schleudert und trocknet. Man erhält ein egal gefärbtes, neutral-graues Dralon-Garn, das sich durch eine sehr gute Lichtechtheit auszeichnet.

**Beispiel 4:**

51 kg Dolan®-(Polyacrylnitril)-Webgarn auf Kreuzspulen werden in einem Scholl-Kreuzspulfärbeapparat, enthaltend eine wässerige Färbeflotte (ca. 750 l) mit 0,5 % einer wässerigen Lösung eines Alkylphenoläthoxylates, 2 % Essigsäure (80 %-ig), 1 % Natriumazetat krist. und 306 g einer schwarzen Farbstoffmischung gemäss Beispiel 1, sowie 408 g des roten Farbstoffes der Formel

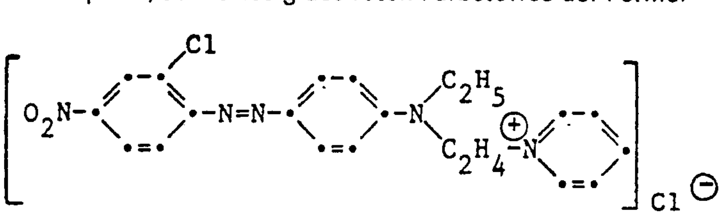

und 1 % einer wässerigen Lösung von Dodecyldimethylbenzylammoniumchlorid bei 75° eingefahren und 10 Minuten bei dieser Temperatur und einer Flottenzirkulation von innen nach aussen behandelt. Anschliessend erhitzt man innerhalb von 45 Minuten auf 100° und färbt während 60 Minuten bei dieser Temperatur. Dann kühlt man ab, spült, schleudert und trocknet. Man erhält ein egal gefärbtes, braunes Dolan-Garn, das sich durch eine sehr gute Lichtechtheit auszeichnet.

**Beispiel 5:**

25 kg Orlon 42®-(Polyacrylnitril)-Garn (Strangware) werden in einen Scholl-Rundfärbeapparat enthaltend eine wässerige Färbeflotte (ca. 750 l) mit 0,5 % einer wässerigen Lösung eines Alkylphenoläthoxylates, 2 % Essigsäure (80 %-ig), 1 % Natriumazetat krist., 10 % Glaubersalz kalz. und 200 g des Farbstoffes der Formel

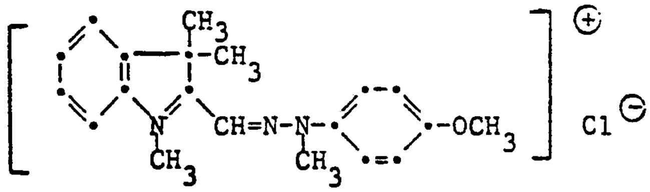

sowie 12,5 g der marineblauen Handelsform gemäss Beispiel 1 und 1 % einer wässerigen Lösung von Dodecylmethylbenzylammoniumchlorid bei 80° eingefahren und während 10 Minuten bei dieser Temperatur behandelt. Dann heizt man im Laufe von 45 Minuten auf 100° und färbt während 60 Minuten bei dieser Temperatur. Anschliessend kühlt man ab bis 60°, spült, schleudert und trocknet. Man erhält ein egal olive gefärbtes Orlon-Garn, das eine hohe Lichtechtheit besitzt.

**Beispiel 6:**

225 kg Euroacril®-(Polyacrylnitril)-Gewebe werden auf einem Thies R-Jet enthaltend eine wässerige Färbeflotte (ca. 2200 l) mit 0,5 % einer wässerigen Lösung eines Alkylphenoläthoxylates, 2 % Essigsäure (80 %-ig), 1 % Natriumazetat krist., 5 % Glaubersalz kalz. und 1800 g des Farbstoffes der Formel

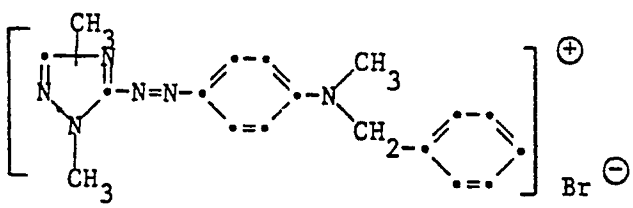

sowie 112,5 der marineblauen Handelsform gemäss Beispiel 1 sowie 0,8 % einer wässerigen Lösung von Dodecylmethylbenzylammoniumchlorid bei 70° eingefahren. Während 5 Minuten verweilt man bei einer Warengeschwindigkeit von 160 m/min; anschliessend heizt man mit 0,5°C/min auf 100° und färbt 30 Minuten bei dieser Temperatur. Dann kühlt man mit 2°C/min auf 50° ab, spült, entwässert und trocknet. Man erhält ein egal bordeaux gefärbtes Gewebe, das sich durch eine hohe Lichtechtheit auszeichnet.

**Beispiel 7:**

100 kg kontinuierlich vorgebauschtes Euroacril® (Polyacrylnitril)-Hochbauschgarn werden als Wickelkörper in einem Henriksen-Zirkulationsfärbeapparat, enthaltend eine wässerige Färbeflotte (ca. 1300 l) mit 0,5 % einer wässerigen Lösung eines Alkylphenoläthoxylates, 2 % Essigsäure (80 %-ig), 1 % Natriumazetat krist. und 1200 g der marineblauen Handelsform gemäss Beispiel 1 bei 70° eingefahren, und während 5 Minuten mit der Flottenzirkulation von innen nach aussen behandelt. Anschliessend erhitzt man innerhalb von 30 Minuten auf 100° und färbt während 60 Minuten bei dieser Temperatur. Dann wird abgekühlt bis 50°, gespült, zentrifugiert und getrocknet. Man erhält ein egal marineblau gefärbtes Euroacril-Garn.

**Beispiel 8:**

In einer geeigneten Mahl- und Misch-Apparatur werden die aus der Tabelle 1 und 2 ersichtlichen Komponenten zu einer staubarmen Handelsform verarbeitet. Mit den folgenden Varianten A - I (Tabelle 1) wird eine schwarze Handelsform und mit den Varianten K - S (Tabelle 2) eine marineblaue Handelsform erhalten.

**Tabelle 1:**

| Farbstoff | Variante: | A | B | C | E | F | G |
|---|---|---|---|---|---|---|---|
| I'' | Teile | 22.3 | - | 15.5 | - | - | 11.3 |
| I'a | Teile | - | 14.8 | - | 9.5 | 8.8 | 7.1 |
| II'' | Teile | 11.3 | 12.0 | - | - | - | 12.2 |
| II'a | Teile | - | - | 10.3 | 10.8 | 14.0 | - |
| III'' | Teile | - | 19.8 | - | - | 19.8 | 19.8 |
| III'b | Teile | 12.8 | - | 13.3 | 12.8 | - | - |
| Natriumsulfat, wasserfrei | Teile | 47.6 | 47.4 | 54.9 | 60.9 | 51.4 | 43.6 |
| Entstäubungsmittel | Teile | 6 | 6 | 6 | 6 | 6 | 6 |

**Tabelle 2:**

| Farbstoff | Variante: | K | L | M | O | P | Q |
|---|---|---|---|---|---|---|---|
| I'' | Teile | 12.3 | - | 6.4 | - | - | 5.9 |
| I'a | Teile | - | 8.2 | - | 4.6 | 3.7 | 4.1 |
| II'' | Teile | 12.8 | 14.1 | - | - | - | 11.4 |
| II'a | Teile | - | - | 9.5 | 9.1 | 11.8 | - |
| III'' | Teile | - | 52.5 | - | - | 52.5 | 52.5 |
| III'b | Teile | 33.7 | - | 33.7 | 33.7 | - | - |
| Natriumsulfat, wasserfrei | Teile | 35.7 | 19.7 | 44.9 | 47.1 | 26.5 | 20.6 |
| Entstäubungsmittel | Teile | 5.5 | 5.5 | 5.5 | 5.5 | 5.5 | 5.5 |

**Farbstoff I'':**

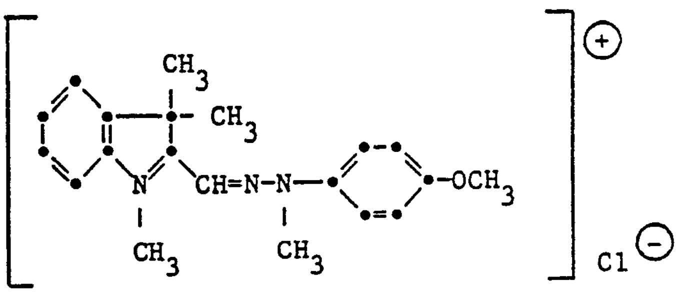

**Farbstoff II'':**

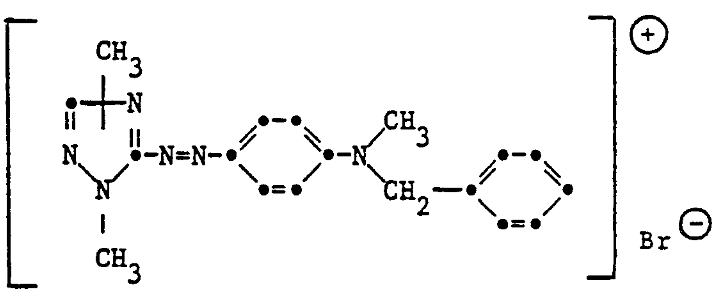

**Farbstoff III'':**

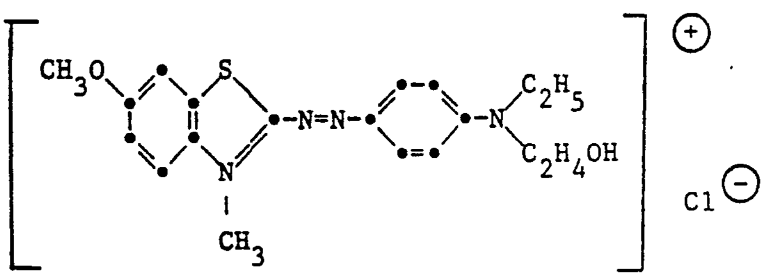

**Farbstoff I'a:**

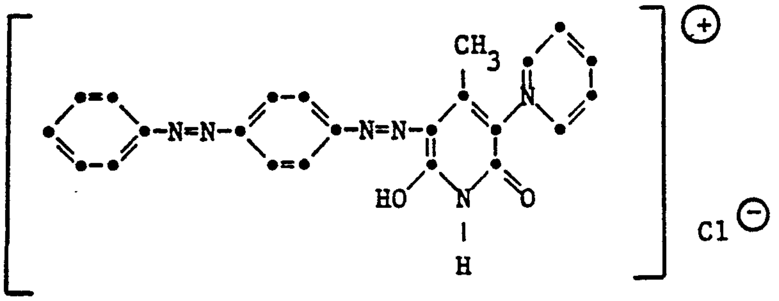

**Farbstoff II'a:**

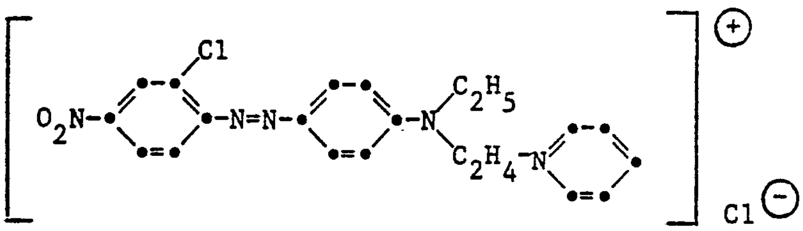

**Farbstoff III'b:**

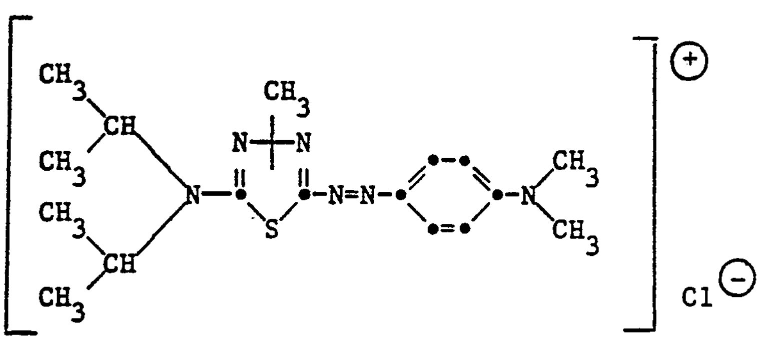

**Beispiel 9:**

190 kg Euroacril® (Polyacrylnitril)-Kammzug werden in Form von Wickeln in einem Henriksen-Zirkulationsfärbeapparat, enthaltend eine wässerige Färbeflotte (ca. 2200 l) mit 0,5 % einer wässerigen Lösung eines Alkylphenoläthoxylates, 2 % Essigsäure (80 %-ig), 1 % Natriumazetat krist. und 2300 g der marineblauen Handelsform gemäss Beispiel 8, Variante R gefärbt. Das Material ist für eine Mélange mit gefärbtem Woll-Kammzug vorgesehen. Eine exakte Übereinstimmung der Polyacrylnitril-Färbung mit der Woll-Färbung, auch am Abendlicht, wird gefordert. Mit Variante R wird die leicht rötliche Abendfarbe der Woll-Färbung erhalten.

**Beispiel 10:**

103 kg Dolan®-(Polyacrylnitril)-Garn (Strangware) werden auf einem Thies Stranggarnfärbeapparat, enthaltend eine wässerige Färbeflotte (ca. 3000 l) mit 0,5 % einer wässerigen Lösung eines Alkylphenoläthoxylates, 2 % Essigsäure (80 %-ig), 1 % Natriumazetat krist., 10 % Glaubersalz kalz. und 750 g des Farbstoffes gemäss Beispiel 8, Variante H der schwarzen Handelsform gefärbt. Man erhält ein grau gefärbtes Dolan-Garn mit hoher Lichtechtheit und guter Dämpfbeständigkeit. Letztere ist deutlich besser als bei einer entsprechenden Färbung bei der der Blauanteil der Schwarzmischung nur allein durch den Farbstoff III bestritten wird.

**Beispiel 11:**

50 kg Stranggarn der Mischung Dralon® (Polyacrylnitril) und Wolle im Mischungsverhältnis 55 : 45 werden in einem Scholl-Rundfärbeapparat enthaltend eine wässerige Färbeflotte (ca. 1500 l) mit 0,5 % einer wässerigen Lösung eines Alkylphenoläthoxylates, 2 % Essigsäure (80 %-ig), 1 % Natriumazetat krist., 10 % Glaubersalz und 210 g der marineblauen Handelsform gemäss Beispiel 8, Variante M während 60 Minuten bei 98° gefärbt. Man erhält ein in einem dunklen, gedeckten Blauton gefärbtes Garn, bei dem der Wollanteil als Effekt weiss gelassen wird. Diese Handelsform zeichnet sich durch gute Stabilität der Farbstoffkomponenten gegenüber den reduzierend wirkenden Wollabbauprodukten im Färbebad aus. Dies gewährleistet eine gute Nuancenstabilität bei verlängerter Färbezeit und einwandfreie Reproduzierbarkeit.

**Patentansprüche**

1. Feste marineblaue bis schmarze Handelsform, enthaltend mindestens eine kationische Gelbkomponente der Formeln

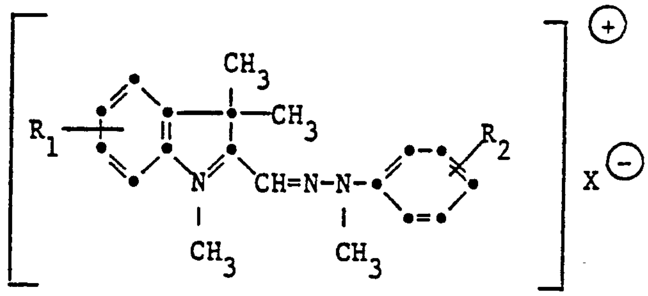

(I)

und/oder

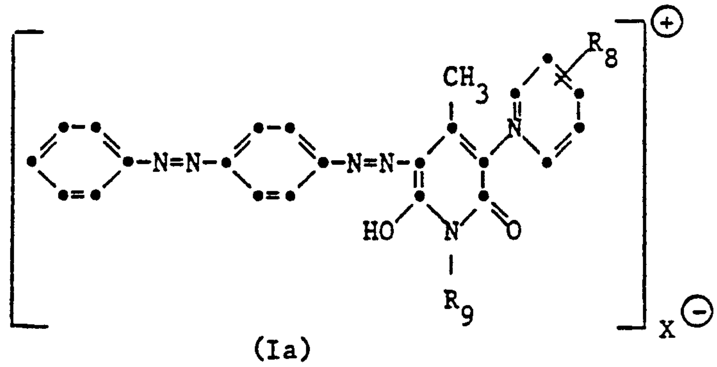

(Ia)

mindestens eine kationische Rotkomponente der Formeln

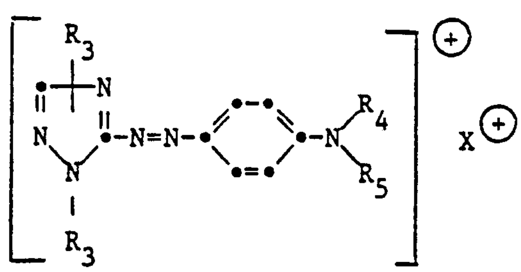

(II)

und/oder

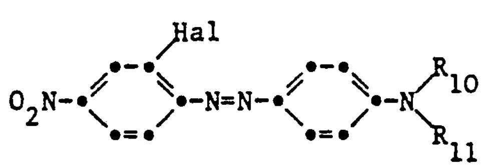

(IIa)

und mindestens eine kationische Blaukomponente der Formeln

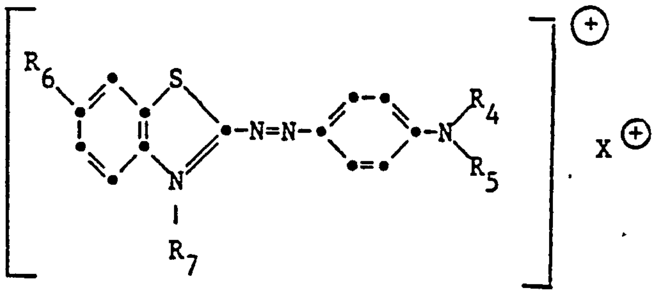

(III)

und/oder

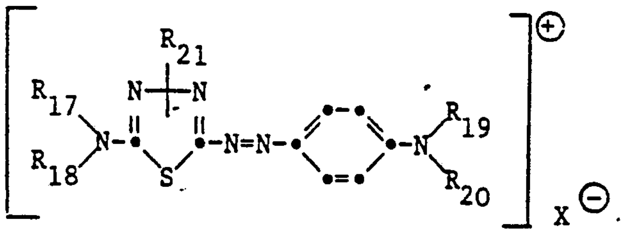

(IIIb)

in welchen Formeln bedeuten:

$R_1$ und $R_2$ unabhängig voneinander Wasserstoff, Halogen, $C_1$-$C_4$-Alkyl und $C_1$-$C_4$-Alkoxy,
$R_3$ $C_1$-$C_4$-Alkyl,
$R_4$ und $R_5$ unabhängig voneinander gegebenenfalls substituiertes $C_1$-$C_4$-Alkyl,
$R_6$ $C_1$-$C_4$-Alkoxy und Acylamino,
$R_7$ $C_1$-$C_4$-Alkyl,
$R_8$ Wasserstoff und Methyl,
$R_9$ Wasserstoff, gegebenenfalls substituiertes $C_1$-$C_6$-Alkyl, Phenyl und Cyclohexyl,
Hal Chlor und Brom,
$R_{10}$ $C_1$-$C_4$-Alkyl,
$R_{11}$ einen Rest der Formeln

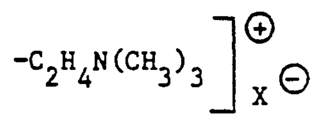

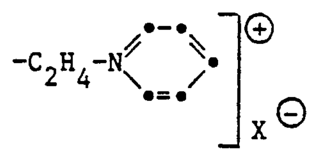

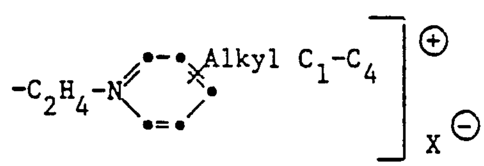

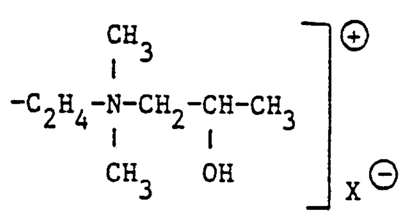

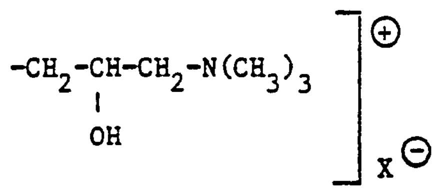

$R_{17}$, $R_{18}$, $R_{19}$ und $R_{20}$ unabhängig voneinander gegebenenfalls substituiertes $C_1$-$C_6$-Alkyl oder $R_{17}$ bildet mit $R_{18}$ unter Einschluss des N-Atoms und gegebenenfalls weiterer Heteroatome einen heterocyclischen 5- oder 6-Ring,
$R_{21}$ gegebenenfalls substituiertes $C_1$-$C_3$-Alkyl, und
X einen anionischen Rest
sowie gegebenenfalls weitere Zusätze enthält.

2. Feste marineblaue Handelsform gemäss Anspruch 1, dadurch gekennzeichnet, dass sie enthält:
10 bis 15 Gew.-% Gelkomponente(n)
8 bis 15 Gew.-% Rotkomponente(n) und
45 bis 55 Gew.-% Blaukomponente(n).

3. Feste marineblaue Handelsform gemäss Anspruch 2, dadurch gekennzeichnet, dass sie enthält:
12 bis 14 Gew.-% Gelbkomponente(n)
10 bis 12 Gew.-% Rotkomponente(n) und
47 bis 51 Gew.-% Blaukomponente(n).

4. Feste schwarze Handelsform gemäss Anspruch 1, dadurch gekennzeichnet, dass sie enthält:
20 bis 25 Gew.-% Gelbkomponente(n)
7 bis 12 Gew.-% Rotkomponente(n) und
15 bis 20 Gew.-% Blaukomponente(n).

5. Feste schwarze Handelsform gemäss Anspruch 4, dadurch gekennzeichnet, dass sie enthält:
22 bis 24 Gew.-% Gelbkomponente(n)
9 bis 10 Gew.-% Rotkomponente(n) und
17 bis 19 Gew.-% Blaukomponente(n).

6. Feste marineblaue bis schwarze Handelsform gemäss Anspruch 1, enthaltend als Gelbkomponente(n) solche der Formel

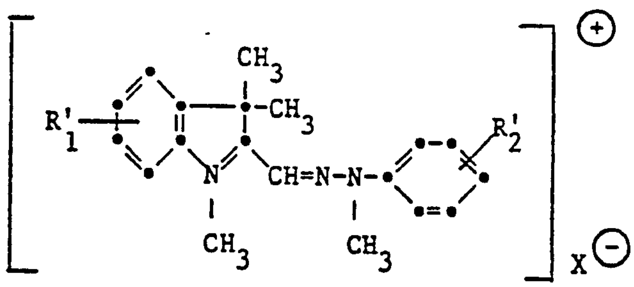

(I')

und/oder

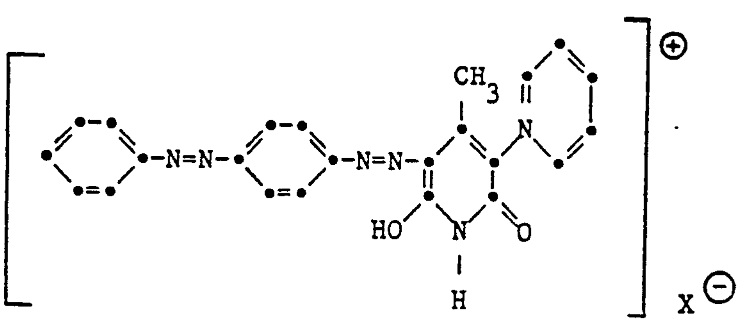

(I'a)

als Rotkomponente(n) solche der Formel

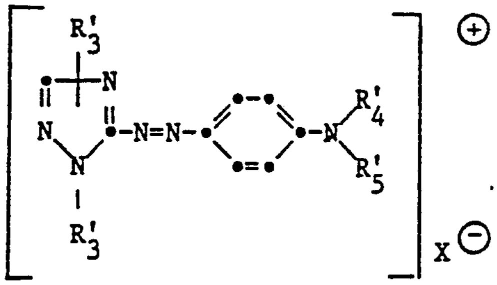

(II')

und/oder

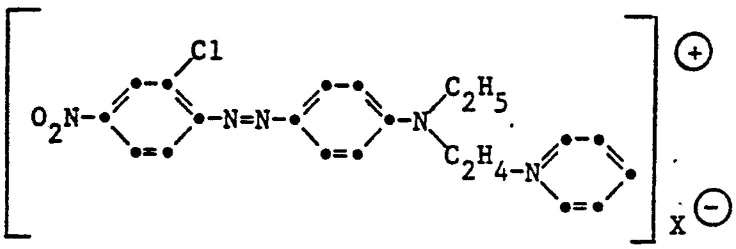

(II'a)

und/oder

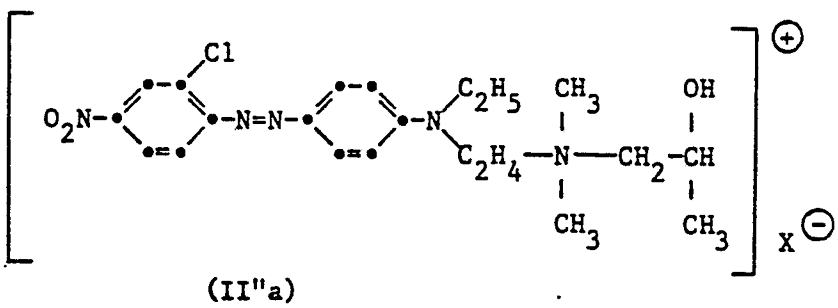

(II"a)

und als Blaukomponente(n) solche der Formel

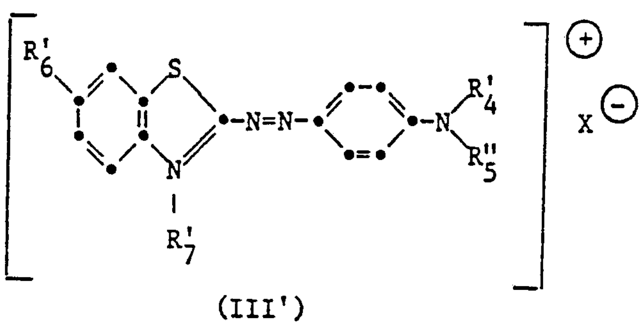

(III')

und/oder

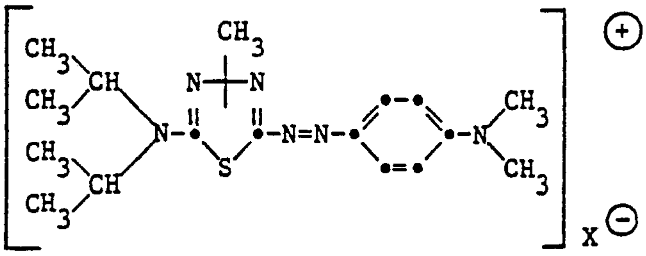

(III'b)

in welchen Formeln bedeuten:

R' Wasserstoff, $R'_2$ eine $C_1$-$C_4$-Alkoxygruppe, $R'_3$ die Methylgruppe, $R'_4$ die Methyl- und Äthylgruppe, $R'_5$ eine durch Phenyl substituierte Methyl- und Äthylgruppe, $R''_5$ eine durch Hydroxyl substituierte Methyl-, Äthyl- und Propylgruppe, $R'_6$ die Methoxygruppe, $R'_7$ die Methyl- und Äthylgruppe und X ein Anion.

7. Feste Handelsform gemäss Anspruch 1 enthaltend als Gelbkomponente eine solche der Formel I, als Rotkomponente eine solche der Formel II und als Blaukomponente eine solche der Formel III.

8. Feste Handelsform gemäss den Ansprüchen 1 bis 7, dadurch gekennzeichnet, dass sie als weitere Zusätze Stellmittel, Entstäubungsmittel und/oder kationische oder nichtionogene Dispergatoren enthält.

9. Verfahren zur Herstellung einer festen Handelsform gemäss Anspruch 1, dadurch gekennzeichnet, dass man die Gelb-, Rot- und Blaukomponenten bei Raumtemperatur in einer Mahl- und Mischapparatur miteinander vermischt und die Mischung vor, während oder nach der Mahlung gegebenenfalls mit weiteren Zusätzen versetzt.

10. Verfahren zum Färben und zum Nuancieren von Buntfarbstoffen von Polyacrylnitrilmaterialien und sauer modifizierten Polyestermaterialien, dadurch gekennzeichnet, dass man eine feste Handelsform gemäss den Patentansprüchen 1 bis 8 verwendet.

## Revendications

1. Formulation solide prête à l'emploi, bleu marine à noire, contenant au moins un composant cationique jaune de formules

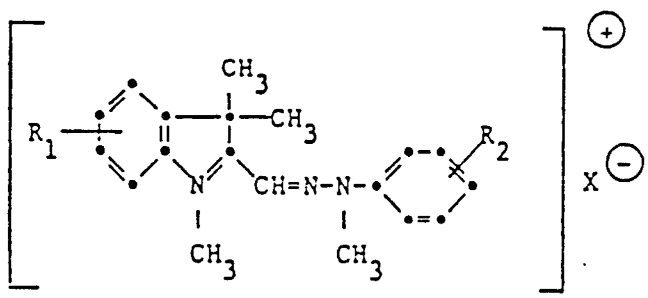

(I)

et/ou

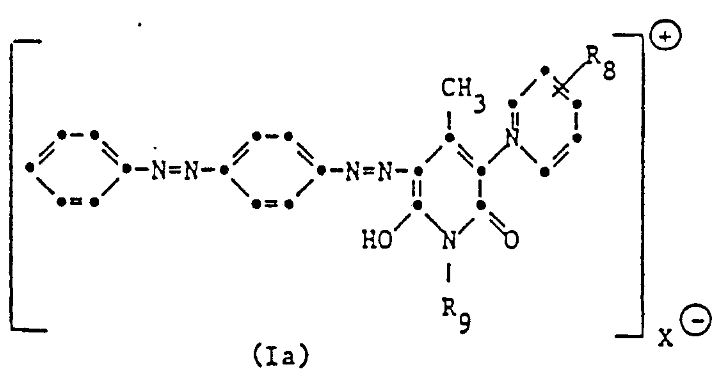

(Ia)

au moins un composant cationique rouge de formules

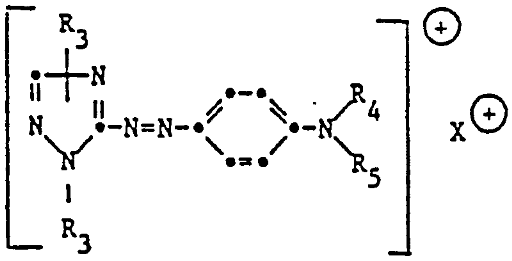

(II)

et/ou

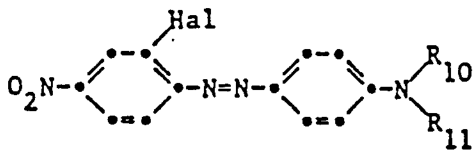

(IIa)

et au moins un composant cationique bleu de formules

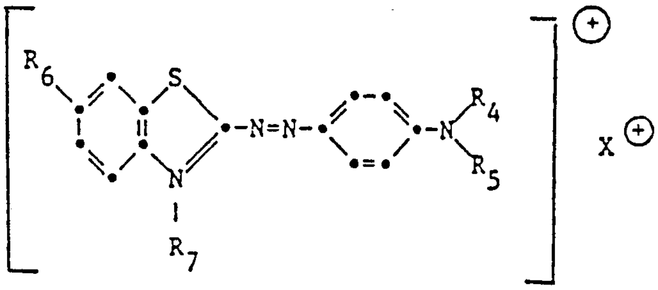

(III)

et/ou

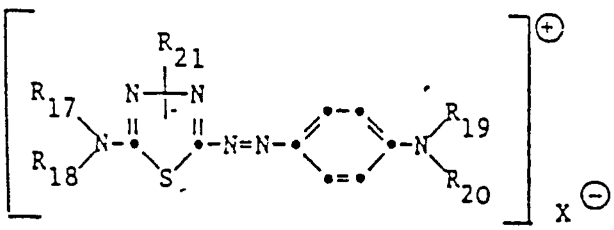

(IIIb)

dans lesquelles formules

$R_1$ et $R_2$ représentent, indépendamment l'un de l'autre, un atome d'hydrogène ou d'halogène, ou un groupe alkyle en $C_1$-$C_4$ ou alcoxy en $C_1$-$C_4$;

$R_3$ représente un groupe alkyle en $C_1$-$C_4$;

$R_4$ et $R_5$ représentent, indépendamment l'un de l'autre, un groupe alkyle en $C_1$-$C_4$ éventuellement substitué;

$R_6$ représente un groupe alcoxy en $C_1$-$C_4$ ou acylamino;

$R_7$ représente un groupe alkyle en $C_1$-$C_4$;

$R_8$ représente un atome d'hydrogène ou le groupe méthyle;

$R_9$ représente un atome d'hydrogène ou un groupe alkyle en $C_1$-$C_6$, phényle ou cyclohexyle, éventuellement substitué;

Hal représente un atome de chlore ou de brome;

$R_{10}$ représente un groupe alkyle en $C_1$-$C_4$;

$R_{11}$ représente un radical de formules

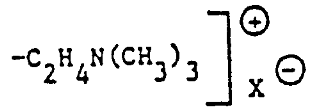

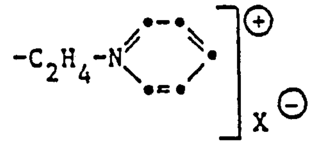

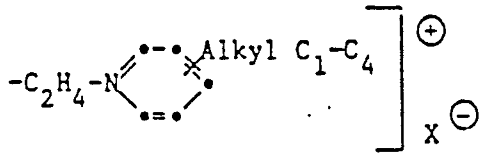

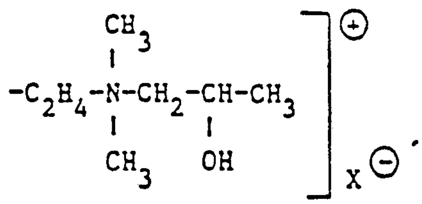

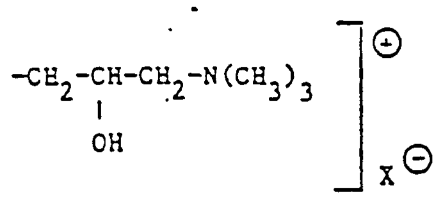

$R_{17}$, $R_{18}$, $R_{19}$ et $R_{20}$ représentent, indépendamment les uns des autres, un groupe alkyle éventuellement substitué, ou $R_{17}$ forme avec $R_{18}$,

conjointement avec l'atome d'azote et, éventuellement, d'autres hétéroatomes, un hétérocycle à 5 ou 6 chaînons;

$R_{21}$ représente un groupe alkyle en $C_1$-$C_3$ éventuellement substitué; et

X représente un radical anionique;

ainsi qu'éventuellement d'autres additifs.

2. Formulation solide prête à l'emploi, bleu marine, selon la revendication 1, caractérisée en ce qu'elle contient

de 10 à 15 % en poids de composant(s) jaune(s),
de 8 à 15 % en poids de composant(s) rouge(s) et
de 45 à 55 % en poids de composant(s) bleu(s).

3. Formulation solide prête à l'emploi, bleu marine, selon la revendication 2, caractérisée en ce qu'elle contient

de 12 à 14 % en poids de composant(s) jaune(s),
de 10 à 12 % en poids de composant(s) rouge(s) et
de 47 à 51 % en poids de composant(s) bleu(s).

4. Formulation solide prête à l'emploi, noire, selon la revendication 1, caractérisée en ce qu'elle contient

de 20 à 25 % en poids de composant(s) jaune(s),
de 7 à 12 % en poids de composant(s) rouge(s) et
de 15 à 20 % en poids de composant(s) bleu(s).

5. Formulation solide prête à l'emploi, noire, selon la revendication 4, caractérisée en ce qu'elle contient

de 22 à 24 % en poids de composant(s) jaune(s),
de 9 à 10 % en poids de composant(s) rouge(s) et
de 17 à 19 % en poids de composant(s) bleu(s).

6. Formulation solide prête à l'emploi, bleu marine à noire, selon la revendication 1, contenant, en tant que composant(s) jaune(s), ceux de formules

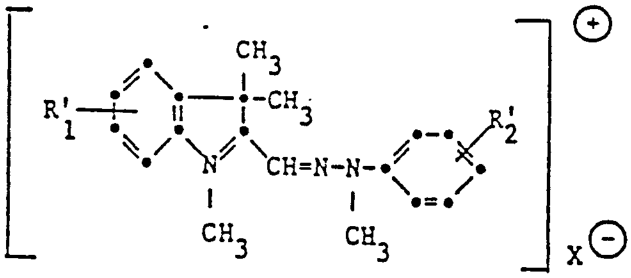

(I')

et/ou

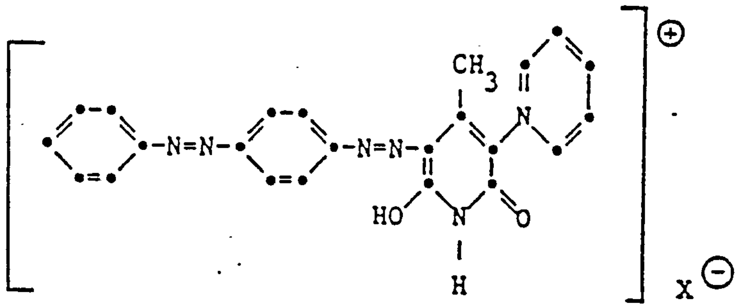

(I'a)

en tant que composant(s) rouge, ceux de formules

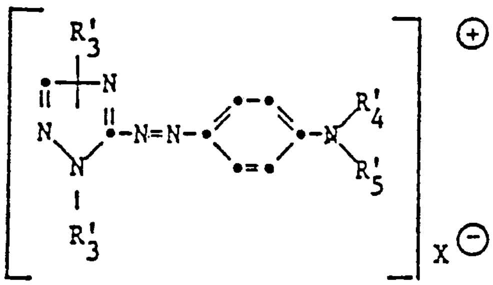

(II')

et/ou

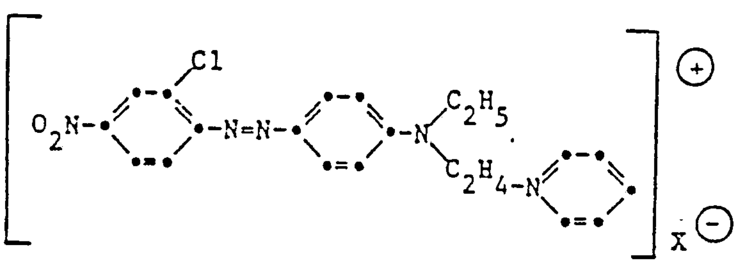

(II'a)

et/ou

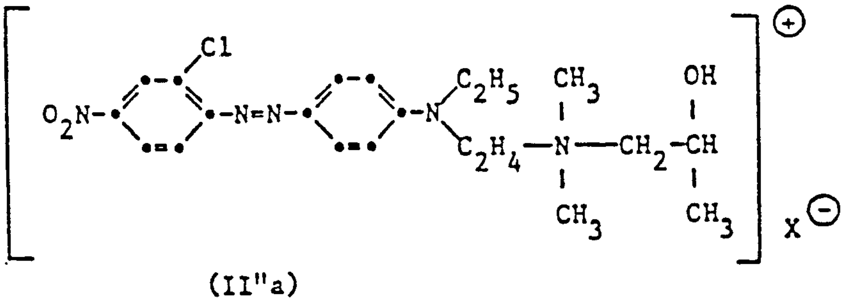

(II"a)

et en tant que composant(s) bleu(s), ceux de formules

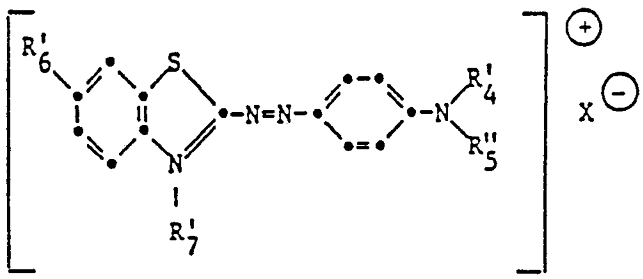

(III')

et/ou

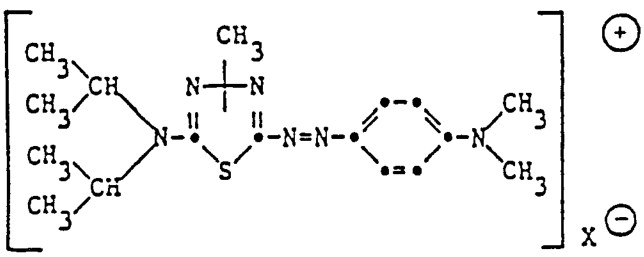

(III'b)

dans lesquelles formules

R' représente un atome d'hydrogène, $R'_2$ représente un groupe alcoxy en $C_1$-$C_4$, $R'_3$ représente le groupe méthyle, $R'_4$ représente le groupe méthyle ou éthyle, $R'_5$ représente un radical méthyle ou éthyle, substitué par un groupe phényle $R''_5$ représente un radical méthyle éthyle ou propyle, subtitué par un groupe hydroxyle, $R'_6$ représente le groupe méthoxy, $R'_7$ représente le groupe méthyle ou éthyle, et X représente un anion.

7. Formulation solide prête à l'emploi, selon la revendication 1, contenant, en tant que composant jaune, un composant jaune de formule I; en tant que composant rouge, un composant rouge de formule II; et en tant que composant bleu, un composant bleu de formule III.

8. Formulation solide prête à l'emploi, selon les revendications 1 à 7, caractérisée en ce qu'elle contient, en tant qu'autres additifs, des produits régulateurs dépôt, des agents anti-poussière et/ou des dispersants cationiques ou non ioniques.

9. Procédé pour la préparation d'une formulation solide prête à l'emploi, selon la revendication 1, caractérisé par le fait qu'on mélange les uns avec les autres les composants jaune(s), rouge(s) et bleu(s), à la température ambiante, dans un appareil de mélange et de broyage, et on ajoute éventuellement d'autres additifs au mélange, avant, pendant ou après le broyage.

10. Procédé pour le nuançage de colorants francs et la teinture de matériaux en polyacrylonitrile ou en polyester à modification acide, caractérisé par le fait qu'on utilise une formulation solide prête à l'emploi selon les revendications 1 à 8.

## Claims

1. A solid, navy blue to black preparation containing at least one cationic yellow component of the formulae

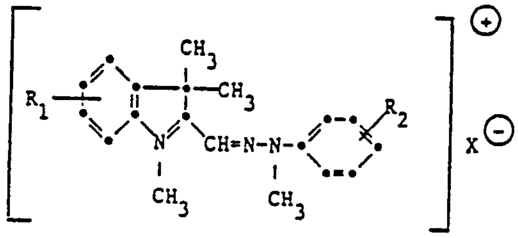

(I)

and/or

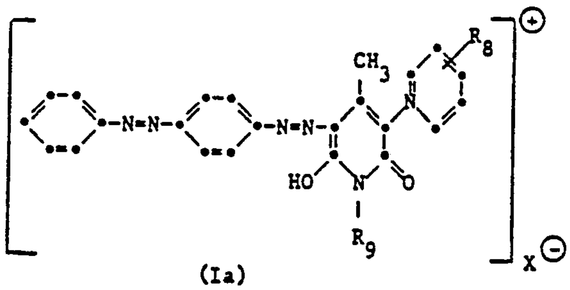

(Ia)

at least one cationic red component of the formulae

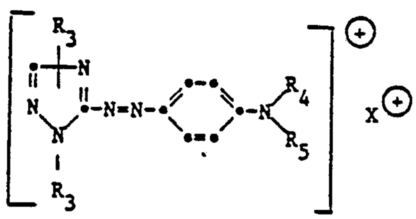

(II)

and/or

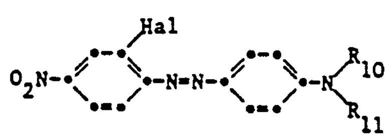

(IIa)

and at least one cationic blue component of the formulae

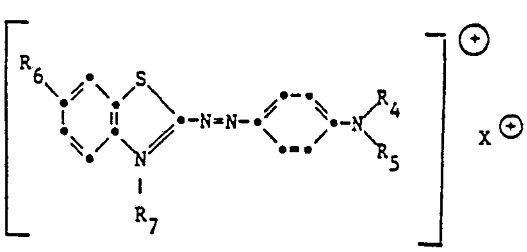

(III)

and/or

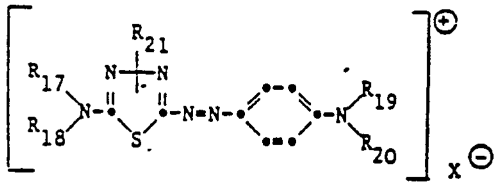

(IIIb)

in which formulae
$R_1$ and $R_2$ independently of one another are each hydrogen, halogen, $C_1$-$C_4$alkyl and $C_1$-$C_4$alkoxy,
$R_3$ is $C_1$-$C_4$alkyl,
$R_4$ and $R_5$ independently of one another are each unsubstituted or substituted $C_1$-$C_4$alkyl,
$R_6$ is $C_1$-$C_4$alkoxy and acylamino,
$R_7$ is $C_1$-$C_4$alkyl,
$R_8$ is hydrogen and methyl,
$R_9$ is hydrogen or unsubstituted or substituted $C_1$-$C_6$alkyl, or is phenyl and cyclohexyl,
Hal is chlorine and bromine,
$R_{10}$ is $C_1$-$C_4$alkyl,
$R_{11}$ is a radical of the formulae

$$\left[-C_2H_4N(CH_3)_3\right]^{\oplus} X^{\ominus}$$

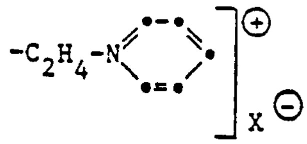

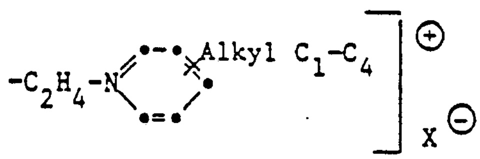

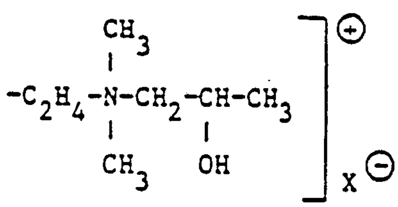

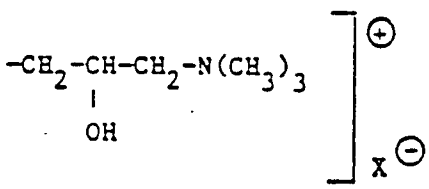

$R_{17}$, $R_{18}$, $R_{19}$ and $R_{20}$ independently of one another are each unsubstituted or substituted $C_1$-$C_6$alkyl, or $R_{17}$ forms with $R_{18}$, with the inclusion of the N atom and optionally further hetero atoms, a heterocyclic 5- or 6-membered ring,
$R_{21}$ is unsubstituted or substituted $C_1$-$C_3$alkyl, and
X is an anionic radical,
and optionally contains further additives.

2. A solid navy blue preparation according to claim 1, which contains:
10 to 15 % by weight of yellow component(s),
8 to 15 % by weight of red component(s) and
45 to 55 % by weight of blue component(s).

3. A solid navy blue preparation according to claim 2, which contains:
12 to 14 % by weight of yellow component(s),
10 to 12 % by weight of red component(s) and
47 to 51 % by weight of blue component(s).

4. A solid black preparation according to claim 1, which contains:
20 to 25 % by weight of yellow component(s),
7 to 12 % by weight of red component(s) and
15 to 20 % by weight of blue component(s).

5. A solid black preparation according to claim 4, which contains:
22 to 24 % by weight of yellow component(s),
9 to 10 % by weight of red component(s) and
17 to 19 % by weight of blue component(s).

6. A solid, navy blue to black preparation according to claim 1, which contains as yellow component(s) those of the formula

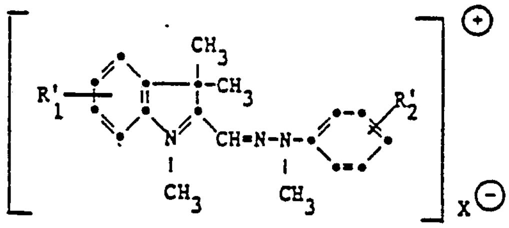

(I')

and/or

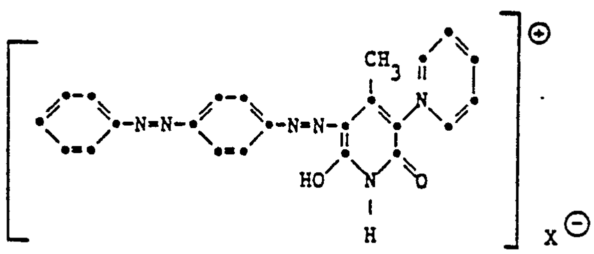

(I'a)

as red component(s) those of the formula

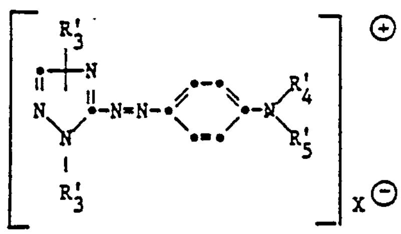

(II')

and/or

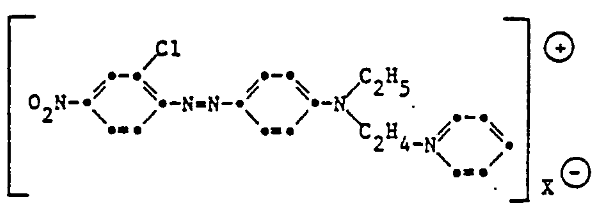

(II'a)

and/or

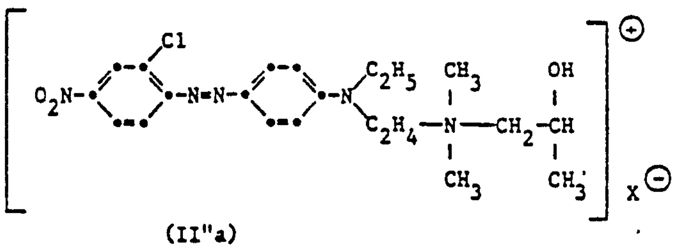

(II"a)

and as blue component(s) those of the formula

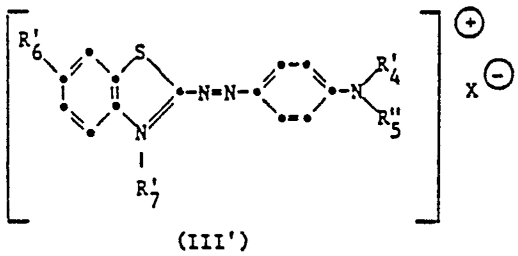

(III')

and/or

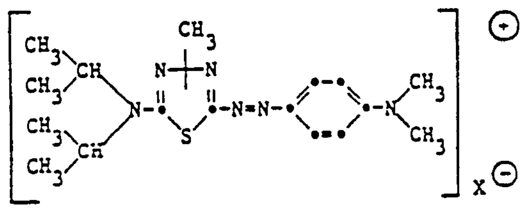

(III'b)

in which formulae R' is hydrogen, $R'_2$ is a Cl-C4alkoxy group, $R'_3$ is the methyl group, $R'_4$ is the methyl or ethyl group, $R'_5$ is a methyl or ethyl group each substituted by phenyl, $R''_5$ is a methyl, ethyl or propyl group each substituted by hydroxyl, $R'_6$ is the methoxy group, $R'_7$ is the methyl or ethyl group, and X is an anion.

7. A solid preparation according to claim 1, which contains as yellow component that of the formula I, as red component that of the formula II, and as blue component that of the formula III.

8. A solid preparation according to any one of claims 1 to 7, which contains, as further additives: standardising agents, antidusting agents and/or cationic or nonionic dispersing agents.

9. A process for producing a solid preparation according to claim 1, which process comprises mixing together the yellow, red and blue components at room temperature in a grinding and mixing apparatus, and optionally adding further additives to the mixture before, during or after grinding.

10. A process for shading coloured dyes and for dyeing polyacrylonitrile materials and polyester materials modified by acid groups, which process comprises the use of a solid preparation according to any one of claims 1 to 8.